# EUROPEAN PATENT APPLICATION

(11) **EP 2 112 385 A2**
(43) Date of publication of application: **28.10.2009**
(21) Application number: 09005641.7
(22) Date of filing: 22.04.2009
(51) Int. Cl.: F16B 21/18

(54) **Guide pin with flange assembled from annular pieces and outer ring**

(30) Priority: 25.04.2008 US 109607
(71) Applicant: Danly IEM, LLC, Boston, MA 02110 (US)
(72) Inventor: Chun, Victor, L., Walton Hills OH 44146 (US)
(74) Representative: Hertz, Oliver

(57) **Abstract**

An article of manufacture comprises a flanged demountable pin (36) or bushing element having a generally cylindrical shape and a main section having a main diameter and a circumferential groove (42). Assembled within the groove is a plurality of partially annular pieces (48A,48B) forming a complete inner collar (48) with an inner diameter section and an outer diameter section. The inner diameter of the inner diameter section of the inner collar is matched to the groove (42) diameter; and in some embodiments the outer diameter of the outer diameter section of the inner collar is greater than the main diameter of the main section such that the inner collar (48) protrudes from the groove (42). An outer ring has an inner diameter section and an outer diameter section and is engaged with the inner collar to form a flange on the element. Also disclosed is a method of manufacturing to order demountable pin or bushing elements.

## Description

This application is a continuation in part of U.S. application no. 11/223,134, filed September 9, 2005. The disclosure of U.S. application no. 11/223,134 is incorporated by reference into this application.

### FIELD OF THE INVENTION

This invention concerns guide pins and bushings used in the construction of forming dies.

### BACKGROUND OF THE INVENTION

Forming dies are comprised of two die parts, respectively mounted to an upper and a lower press platen. A guide pin or post is mounted to one die part, and a guide bushing is mounted to the other die part in alignment with the pin. The pin and bushing mate with each other when the press is actuated to guide the die parts into accurate registry. Such pins and posts may be press fit into holes in the respective die parts, but this makes disassembly for repairs difficult. To address this difficulty, socalled "demountable" pins and bushings have been developed, in which the pin and bushing are slidably fit in the die bases and are held with clamps engaging a flange on the pin or bushing, pressing the same against the adjacent die-part surface. The die-part surface is ground so that the pin and bushing are thereby precisely aligned with each other.

The flange has conventionally been formed by machining down largediameter stock to form the pin or bushing, thereby producing much wasted material and increasing the time necessary to produce the pin or bushing. It thus has been necessary to manufacture and stock pins and bushings so as to achieve reasonably rapid delivery times. Stocking pins and bushings substantially increases costs because many configurations and sizes of pins and bushings must be stocked in order to be available for delivery on short notice.

It is an object of the present invention to provide flanged guide pins and bushings and a method of manufacturing flanged guide pins and bushings to a customer order. The method allows pins and bushings to be made rapidly to order while eliminating the need to waste time and material in machining the pins to form an integral flange. The method also reduces or eliminates the need to stock a large number of different pins and bushings.

### SUMMARY OF THE INVENTION

The above object, and other objects that will become apparent upon a reading of the following specification and claims, are achieved by stocking lengths of standard-diameter shafts and tubes that have been heat-treated and precision-ground to a finished inside or outside diameter. When an order is received, the shafts and/or tubes of the desired diameters are cut to length. A ring is assembled onto the pin or bushing at a specified location in such a way as to be the functional equivalent of the integral flange, i.e., a flange having an accurately controlled size, location, and orientation and having sufficient rigidity to perform the retention function of an integral flange.

In one embodiment of the invention, a groove at the desired location of the flange is machined into the outside diameter of the pin or bushing. The pieces of an inner collar are assembled onto the pin or bushing fit within the groove. An outer ring is pressed onto the inner collar, creating the flange. In an alternative embodiment, the inner collar may have an inner diameter, an intermediate diameter, and an outer diameter so as to create a shoulder on the outside of the inner collar. The intermediate diameter of the inner collar may be greater than, and preferably will be about 1 mm greater than, the main diameter of the pin or bushing. The outer diameter of the outer diameter section of the inner collar is greater than the main diameter of the main section such that the inner collar has an external shoulder; preferably the outer diameter of the outer diameter section of the inner collar is about 6 mm greater than the main diameter of the main section. In an alternative embodiment, the outer ring may have an inner diameter, an intermediate diameter, and an outer diameter so as to create a shoulder on the inside of the outer collar. Some embodiments include a shoulder on both the outside of the inner collar and the inside of the outer collar.

In some embodiments, the pin or bushing is machined with a double stepped diameter forming an intermediate land between large and small diameter sections thereof. A solid ring is press or shrunk fit onto a first step in abutment with a shoulder formed by a second step on the pin or bushing section.

In some embodiments, a solid ring is precisely located and oriented on the outside diameter of the pin or bushing by use of suitable fixturing and secured by a shrink fit to the pin or bushing outside diameter. While less strong, this method is the least expensive as no additional machining is required.

### DESCRIPTION OF THE DRAWINGS

The invention is best understood from the following detailed description when read with the accompanying drawings.

FIG. 1 is an elevational view of a guide pin installed in a bore in a die plate, shown in section.

FIG. 2 is an elevational view in section of a guide bushing installed in a bore in a die plate, a fragmentary portion thereof also shown in section.

FIG. 3A is a much enlarged side view of a guide pin machined in preparation for installing a flange thereon.

FIG. 3B is a much enlarged side view of an alternative guide pin machined in preparation for installing a flange thereon.

FIG. 4 is a pictorial view of the guide pin machined portion shown in FIG. 3 with partially annular pieces partially assembled thereon to form an inner collar.

FIG. 5 is a side view of the guide pin shown in FIG. 4 with an outer ring installed over the previously assembled annular pieces.

FIG. 6 is a pictorial view of a guide pin with the flange completely assembled thereon.

FIG. 7 is a pictorial view of a fragmentary portion of a guide bushing having a ring affixed thereto.

FIG. 8 is a partially sectional view of an installed guide bushing having a ring attached as by the method shown in FIG. 7 with fragmentary portions of the associated die part.

FIG. 9 is an exploded pictorial view of the guide bushing shown in FIGS. 7 and 8.

FIG. 10 is a fragmentary elevational view in partial section of a stage in an assembly method according to the present invention.

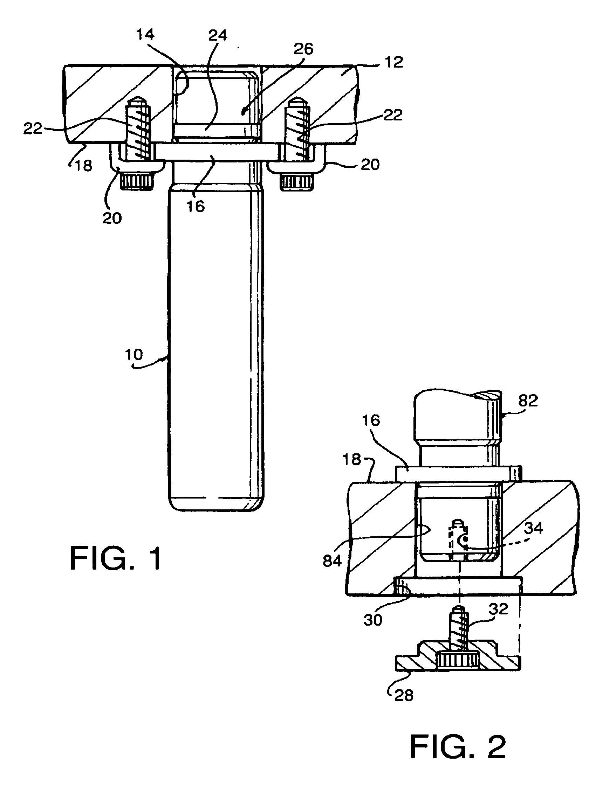

FIG. 1 is a side view of a guide pin with an outer ring installed over the previously assembled inner collar.

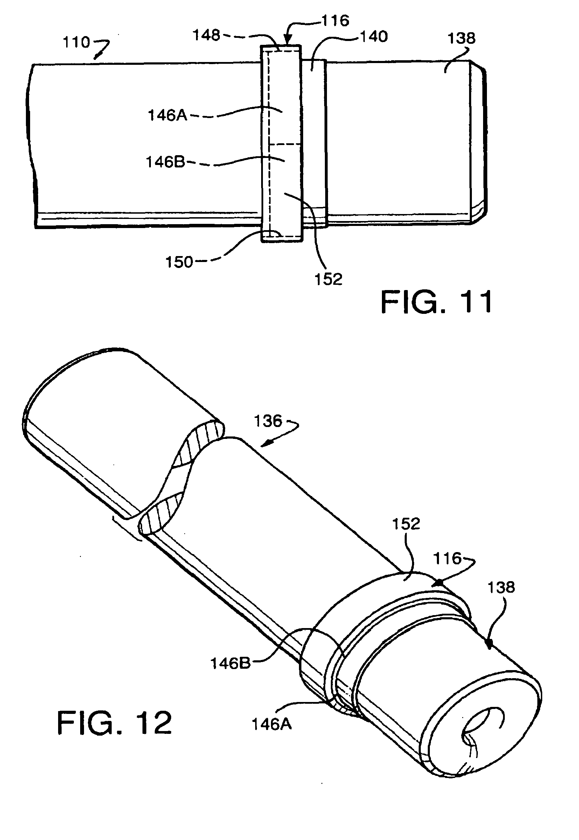

FIG. 12 is a pictorial view of a guide pin with a flange completely assembled thereon.

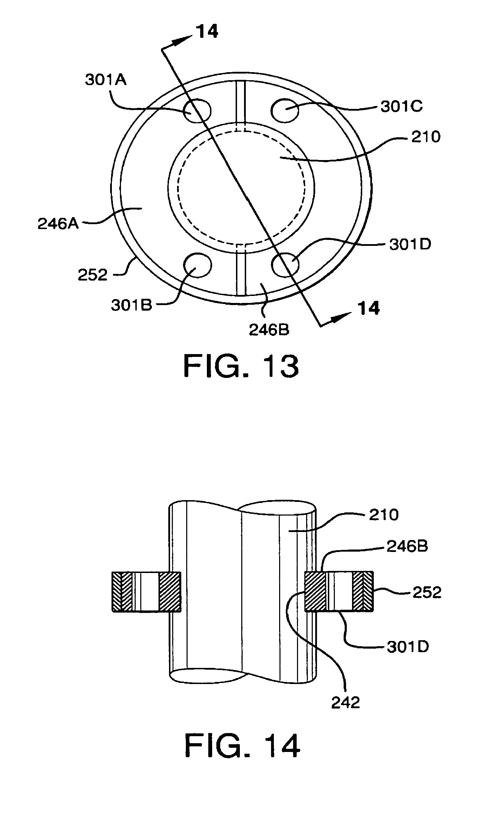

FIG. 13 is a top view of an alternative embodiment of a guide pin with a flange completely assembled thereon.

FIG. 14 is a side view and partial sectional view of the embodiment shown in Fig. 13.

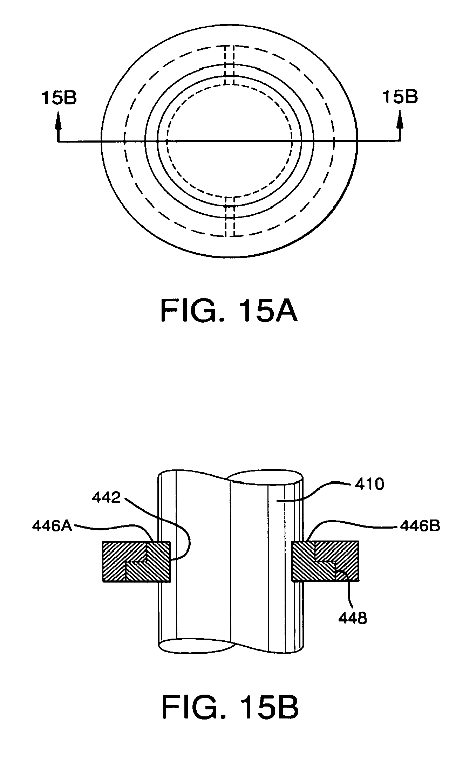

FIG. 15A is a top view of an alternative embodiment of a guide pin with a flange completely assembled thereon.

FIG. 15B is a side view and partial sectional view of an alternative embodiment of a guide pin with a flange completely assembled thereon.

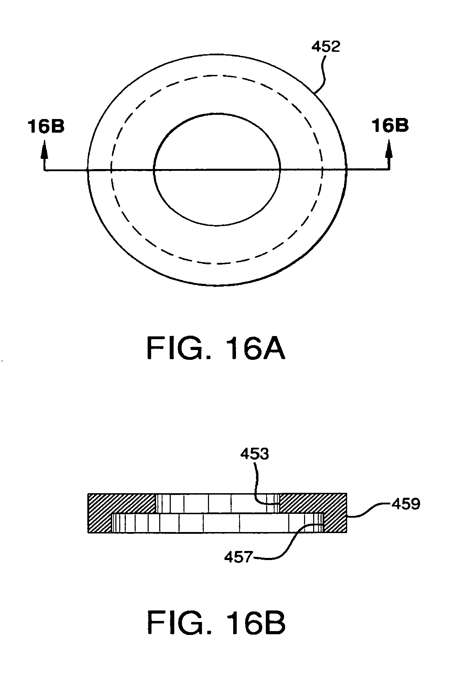

FIG. 16A is a top view of an outer ring used in the embodiment shown in FIG. 15.

FIG. 16B a section of an outer ring used in the embodiment shown in FIG. 15.

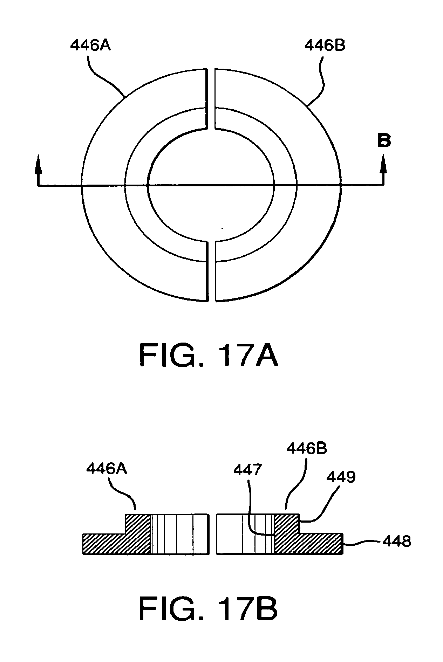

FIG. 17A is a top view of the annular pieces for forming an inner collar used in the embodiment shown in FIG. 15.

FIG. 17B is a sectional view of the annular pieces for forming an inner collar used in the embodiment shown in FIG. 15.

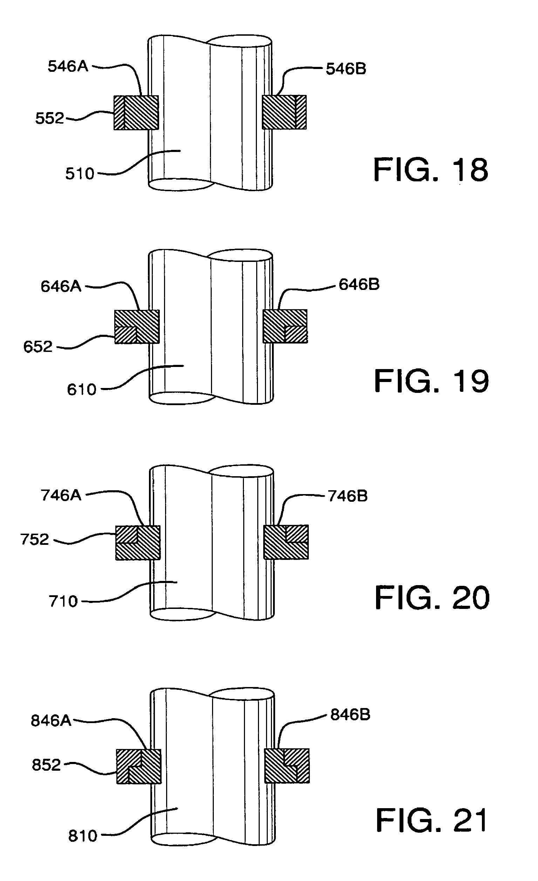

FIG. 18 is a side view and partial sectional view of an alternative embodiment of a guide pin with a flange completely assembled thereon.

FIG. 19 is a side view and partial sectional view of an alternative embodiment of a guide pin with a flange completely assembled thereon.

FIG. 20 is a side view and partial sectional view of an alternative embodiment of a guide pin with a flange completely assembled thereon.

FIG. 21 is a side view and partial sectional view of an alternative embodiment of a guide pin with a flange completely assembled thereon.

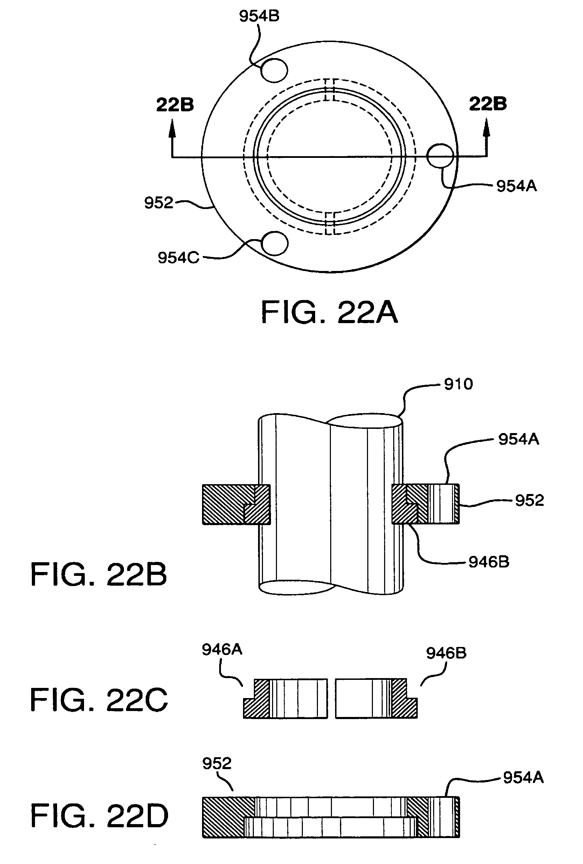

FIG. 22A is a top view of an alternative embodiment of a guide pin with a flange completely assembled thereon.

FIG. 22B is a side view and partial sectional view of an alternative embodiment of a guide pin with a flange completely assembled thereon.

FIG. 22C is a top view of the annular pieces for forming an inner collar used in the embodiment shown in FIGS. 22A and 22B.

FIG. 22D is a sectional view of the outer ring used in the embodiment shown in FIGS. 22A and 22B.

### DETAILED DESCRIPTION OF THE INVENTION

In the following detailed description, certain specific terminology will be employed for the sake of clarity and a particular embodiment described in accordance with the requirements of 35 USC 112, but it is to be understood that the same is not intended to be limiting. The invention is capable of taking many forms and variations within the scope of the appended claims.

Referring to FIG. 1, a demountable element 10 is shown, here comprised of a pin 10, which is installed in a hole 14 in a die plate 12. The pin 10 has a flange 16 which has one face held in abutment against a ground surface 18 of the die plate 12 by a series of three or more clamps 20 secured with machine screws 22.

A land 24 on a pin segment 26 received in the hole 14 may mate with a precision ground outer section of the hole 14 for achieving precisely accurate location thereof. The flange 16 being held in abutment against the ground die surface 18 accurately aligns the pin axis normal to the surface 18 to insure proper mating engagement with a bushing on another die plate (not shown) in the well known manner. The remaining section of the pin segment 26 may be machined to be a clearance fit with the hole 14. The flange 16 must thus be accurately oriented to be normal to the pin axis.

FIG. 2 shows an alternate retainer plug securement of the flange 16 with one face in abutment against the die surface 18. This includes a plug 28 able to be received in a counterbore 30 of the hole 84. A screw 32 is threadably received in a threaded hole 34 in the end of the pin 82 to advance the flange 16 against the surface 18.

According to the present invention, the flange 16 is not made by machining a larger diameter section of stock material to form an integral flange on a pin (or bushing), but rather the flange 16 is created by securing a separate piece or pieces onto a premachined pin to form the flange.

This allows stocking of standard diameter shafts and tubes which have been mostly machined. When an order is received, appropriate lengths are cut and certain details, i.e. grooves, etc. are machined into the shafts or tubes. The separate flange piece or pieces are then installed at the appropriate location.

Thus, stocking of finished pins or bushings is not necessary while allowing prompt delivery schedules for made to order pins or bushings.

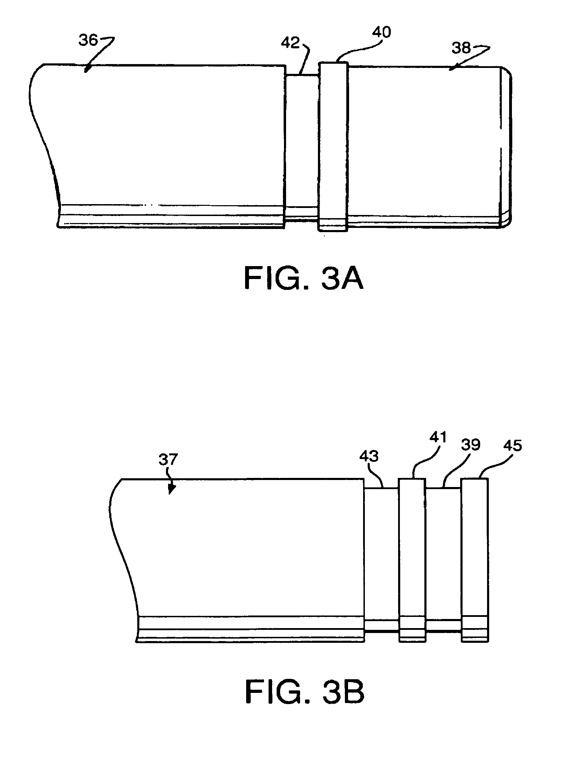

FIGS. 3A and 4-6 show an embodiment of a demountable element with a flange secured thereto.

A pin 36 has a pre-finished diameter 40, which is the same diameter as 36, to be inserted in a hole, with a slightly smaller diameter land 38 optionally precision machined adjacent to diameter 40. Pin 36 also has groove 42.

FIG. 3B shows an alternative demountable pin 37, which has groove 43 and secondary groove 39, which is located near one end of pin 37 and preferable near groove 43. Secondary groove 39 has adjacent thereto intermediate segment 41 and end segment 45. Intermediate segment 41 and end segment 45 have a common diameter adapted for mating with a hole when the pin is in use. For ease of manufacturing, the common diameter of segments 41 and 45 preferably is the same as the main diameter of the demountable pin 37. Segments 41 and 45 enhance the stability of the pin 37 when mounted in a mounting hole, and secondary groove 39 reduces frictional drag when the demountable pin 37 is being installed into a mounting hole.

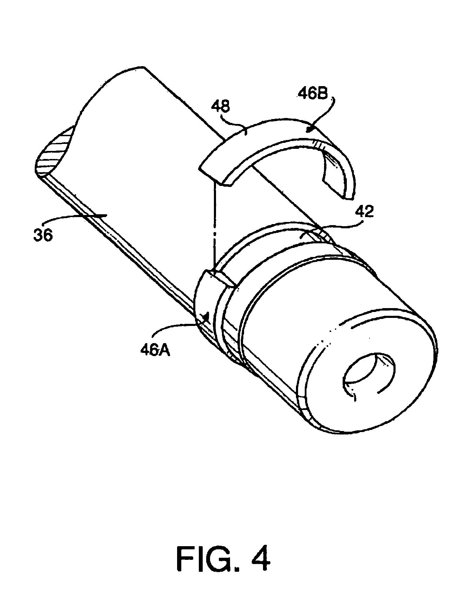

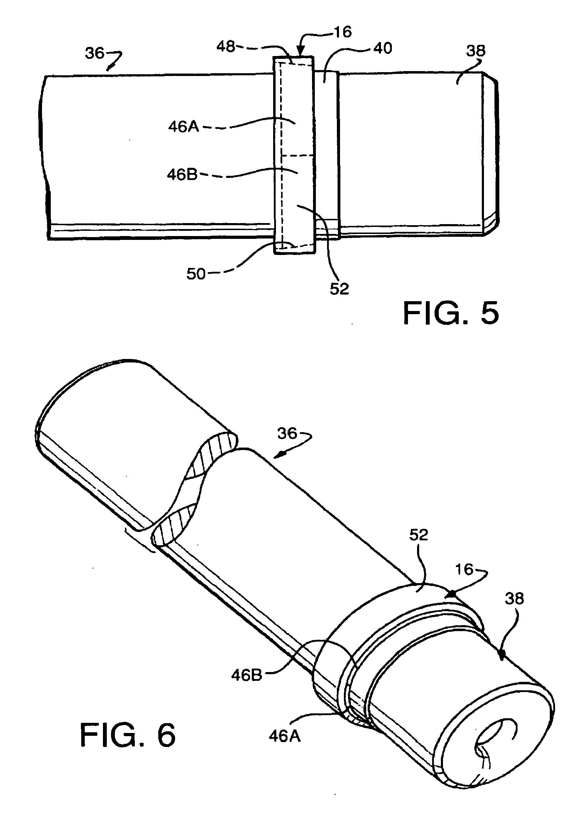

In FIGS. 4-6, two semicircular partially annular ring segments 46A, 46B are installed in the groove 42. The segments are sized to just encircle the groove 42 and project beyond the diameter of the land 40. The outer diameter section 48 of the ring formed by the two pieces 46A, 46B is engagable with the inner diameter section 50 of outer ring 52, which as shown in FIG. 5 is pressed onto the two inner pieces 46A, 46B. This forms a unitary flange 16 for use in clamping and aligning the pin 36 as described above.

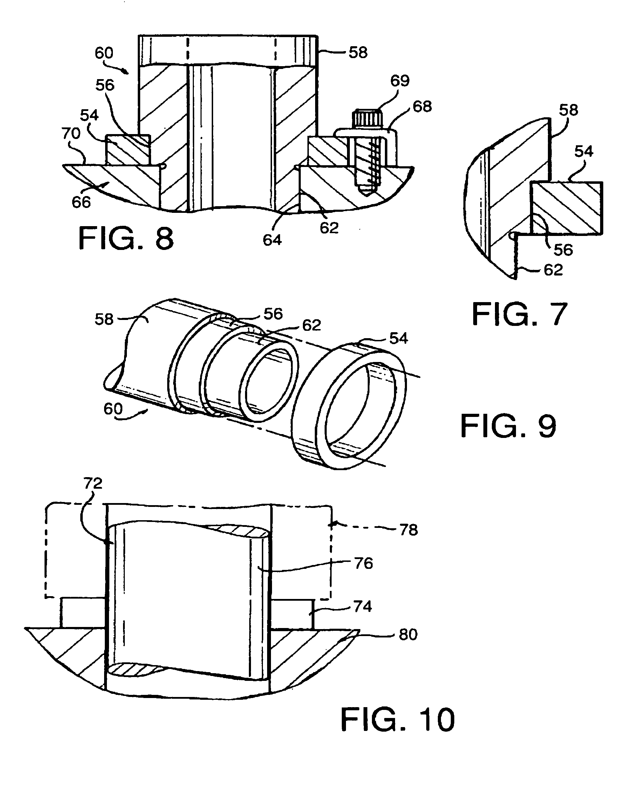

FIGS. 7-9 show an embodiment in which a single ring 54 is shrink fit onto a land 56 formed between two shoulders machined into a cut length of tubular stock 58 in abutment against an outer shoulder formed by the main outside diameter of the length of stock to form a demountable bushing 60. The bushing 60 has a precision ground diameter 62 slidably fit in a precision ground bore 64 machined into a die plate 66. The abutment against the outer shoulder provides a precise axial location of the flange so formed and aids in insuring squareness of the ring 54 to the longitudinal axis of the bushing.

Three or more clamps 68 and screws 69 force one face of the flange formed by the installed ring 54 against the ground die face 70 to secure the demountable bushing 60 and align the axis thereof.

FIG. 10 shows an alternative embodiment in which a pin 72 has a continuous ring 74 shrunk fit onto the outside diameter 76 of pin 72. This is done with the aid of fixturing 78, 80 to insure perfect location and squareness of the installed ring 74 shrunk fit to the pin 72 to form the flange.

This results in less strength than the above described flanges, but is adequate for the purposes described.

In an alternative embodiment shown in FIG. 11 and FIG. 12, two semicircular partially annular ring segments 146A, 146B are installed in a groove in element 110. The segments are sized to just encircle the groove and project beyond the diameter of the land 140. The outer diameter section 148 of the inner collar formed by the two pieces 146A, 146B is engagable with the inner diameter section 150 of outer ring 152, which is pressed onto the two inner pieces 146A, 146B. This forms a unitary flange 116 for use in clamping and aligning the pin 136 as described above. Land 138 is precision machined to mate with a mounting hole in a press platen.

In another alternative embodiment shown in FIG. 13, and FIG. 14, two semicircular partially annular ring segments 246A, 246B are installed in a groove 242. The segments are sized to just encircle the groove 242 and project beyond the main diameter of the element 210. Outer ring 252 is pressed onto the two inner pieces 246A and 246B and has mounting holes 301A, 301B, 301C, and 301D passing therethrough.

In another alternative embodiment shown in FIGS. 15A, 15B, 16A, 16B, 17A, and 17B, two semicircular partially annular ring segments 446A, 446B are installed in the groove 442 in element 410. The segments are sized to just encircle the groove 442 and project beyond the groove 442. The outer diameter section 448 of the inner collar formed by the two pieces 446A, 446B is engagable with the intermediate diameter section 457 of outer ring 452, which is pressed onto the two inner pieces 446A, 446B.

Additional alternative embodiments are shown in FIG. 18, FIG. 19, FIG. 20, and FIG. 21. In each of these embodiments, two semicircular partially annular ring segments (546A and 546B, 646A and 646B, 746A and 746B, and 846A and 846B, respectively), are installed in a groove in respective element 510, 610, 710, and 810. The invention may be practiced in several distinct embodiments, including but not limited to those specifically depicted herein, with engagement between the inner collar and the outer ring occurring in several different configurations.

The invention includes a manufacturing method that allows pin and bushing elements to be conveniently manufactured to order. One embodiment of the method includes the following steps: (a) stocking lengths of a series of machined cylindrical stock; (b) cutting the stock to form a rough element of having an ordered length and a main diameter section having a main diameter; (c) machining the rough element to create a circumferential groove in the main section, the circumferential groove having a diameter less than the main diameter; (d) providing plurality of partially annular pieces with an inner diameter section having a substantially uniform inner diameter, each said annular piece forming a segment of an annulus, the annular pieces configured to be assembled around and within the groove to form a complete inner collar having an inner diameter section and an outer diameter section, the inner diameter of the inner diameter section of the inner collar being matched to the groove diameter, and the outer diameter of the outer diameter section of the inner collar being greater than the main diameter of the main section such that the inner collar protrudes from the circumferential groove; (e) providing an outer ring having an inner diameter section and an outer diameter section, (f) the outer ring being engagable with the inner collar to form a flange on the element; (g) assembling the annular pieces around and within the groove to form a complete inner collar; and engaging the outer ring with the inner collar to form a flange on the rough element. Any necessary machining operations can be added to this manufacturing method at an appropriate point before or after assembly of the flange. For example, any necessary counterbore may be machined before or after undertaking the steps of the exemplary manufacturing method of the invention.

While the invention has been described by illustrative embodiments, additional advantages and modifications will occur to those skilled in the art. Therefore, the invention in its broader aspects is not limited to specific details shown and described herein. Modifications may be made without departing from the spirit and scope of the invention. For example, an inner collar or outer ring having additional intermediate diameters to create additional shoulders thereon, or inner collars or outer rings of other cross sections, may be employed. Accordingly, it is intended that the invention not be limited to the specific illustrative embodiments, but be interpreted within the full spirit and scope of the appended claims and their equivalents.

## Claims

1. An article of manufacture comprising:
a flanged demountable pin or bushing element having a generally cylindrical shape,
the element having a main section having a main diameter, and the element having a circumferential groove in the main section, the circumferential groove having a diameter less than the main diameter;
a plurality of partially annular pieces with an inner diameter section having a substantially uniform inner diameter, each said annular piece forming a segment of an annulus, the annular pieces assembled around and within the groove to form a complete inner collar having an inner diameter section and an outer diameter section;
the inner diameter of the inner diameter section of the inner collar being matched to the groove diameter,
the outer diameter of the outer diameter section of the inner collar being greater than the main diameter of the main section such that the inner collar protrudes from the circumferential groove;
an outer ring having an inner diameter section and an outer diameter section,
the outer ring being engaged with the inner collar to form a flange on the element.

2. An article of manufacture according to claim 1 wherein
each said annular piece has an intermediate diameter section having an intermediate diameter,
the intermediate diameter of the intermediate diameter section of the inner collar being greater than the inner diameter of the inner collar and greater than the main diameter of the element,
and the outer diameter of the outer diameter section of the inner collar being greater than the main diameter of the main section such that the inner collar has an external shoulder that protrudes from the circumferential groove.

3. An article of manufacture according to claim 1 wherein
the outer ring has an intermediate diameter section having an intermediate diameter,
the intermediate diameter of the outer ring being greater than the inner diameter thereof and less than the outer diameter thereof such that the outer ring has an interior shoulder.

4. An article of manufacture according to claim 1 wherein each annular piece has an axially oriented mounting hole passing therethrough.

5. An article of manufacture according to claim 1 wherein the inner collar is formed by two annular pieces and wherein each annular piece has two axially oriented mounting holes passing therethrough.

6. An article of manufacture according to claim 2 wherein the inner diameter section of the outer ring engages the intermediate diameter section of the inner collar.

7. An article of manufacture according to claim 2 wherein the outer ring has an intermediate diameter section having an intermediate diameter,
the intermediate diameter of the outer ring being greater than the inner diameter thereof and less than the outer diameter thereof such that the outer ring has an interior shoulder, and
wherein the exterior shoulder of the inner collar is complementary to and engages with the interior shoulder of the outer ring.

8. An article of manufacture according to claim 7 wherein the inner collar and outer ring are oriented so that a surface of the inner collar is the bearing surface of the flange.

9. An article of manufacture according to claim 7 wherein the inner collar and outer ring are oriented so that a surface of the outer ring is the bearing surface of the flange.

10. An article of manufacture according to claim 1 wherein at least one annular piece has a mounting hole passing therethrough.

11. An article of manufacture according to claim 1, wherein the inner collar is formed from two annular pieces, each of which has at least one mounting hole passing therethrough.

12. An article of manufacture according to claim 1, wherein the inner collar is formed from two annular pieces, the first annular piece having a single mounting hole passing therethrough, and the second annular piece having two mounting holes passing therethrough.

13. An article of manufacture according to claim 1, wherein the inner collar is formed from two annular pieces, each of which has at least two mounting holes passing therethrough.

14. An article of manufacture according to claim 1, wherein the outer ring has at least one mounting hole passing therethrough.

15. An article of manufacture according to claim 1, wherein the outer ring has at least three mounting holes passing therethrough.

16. An article of manufacture according to claim 1, wherein the element has a main section having a main diameter, a circumferential groove in the main section, and a secondary circumferential groove in the main section, wherein the circumferential groove has a diameter less than the main diameter and the secondary circumferential groove has a diameter less than the main diameter, and wherein the annular pieces are assembled around and within the circumferential groove.

17. An article of manufacturing according to claim 1, wherein the element has a first end, a second end, and a main section having a main diameter, and wherein the circumferential groove is located a distance from the first end, and wherein the element has a secondary circumferential groove located between the circumferential groove and the first end so as to form an intermediate segment located between the circumferential groove and the secondary circumferential groove and an end segment located adjacent the first end of the element, and wherein the annular pieces are assembled around and within the circumferential groove.

18. A method of manufacturing comprising:
stocking lengths of a series of machined cylindrical stock;
cutting the stock to form a rough element of having an ordered length and a main diameter section having a main diameter;
machining the rough element to create a circumferential groove in the main section, the circumferential groove having a diameter less than the main diameter;
providing plurality of partially annular pieces with an inner diameter section having a substantially uniform inner diameter, each said annular piece forming a segment of an annulus, the annular pieces configured to be assembled around and within the groove to form a complete inner collar having an inner diameter section and an outer diameter section, the inner diameter of the inner diameter section of the inner collar being matched to the groove diameter, and the outer diameter of the outer diameter section of the inner collar being greater than the main diameter of the main section such that the inner collar protrudes from the circumferential groove;
providing an outer ring having an inner diameter section and an outer diameter section, the outer ring being engagable with the inner collar to form a flange on the element; assembling the annular pieces around and within the groove to form a complete inner collar; and
engaging the outer ring with the inner collar to form a flange on the rough element.

19. The method according to claim 18 wherein the partially annular elements are previously manufactured and stocked for standard diameter elements.
